(19) **Europäisches Patentamt / European Patent Office / Office européen des brevets**

(11) **EP 3 124 577 A1**

(12) **DEMANDE DE BREVET EUROPEEN**

(43) Date de publication:
01.02.2017 Bulletin 2017/05

(51) Int Cl.:
*C10G 45/02* (2006.01)    *B01D 19/00* (2006.01)

(21) Numéro de dépôt: **16305812.6**

(22) Date de dépôt: **30.06.2016**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(30) Priorité: **28.07.2015 FR 1557212**

(71) Demandeur: **IFP Énergies nouvelles**
**92852 Rueil-Malmaison (FR)**

(72) Inventeurs:
• **LECOCQ, Vincent**
  **69530 ORLIENAS (FR)**
• **PIERRON, Anne-Claire**
  **38550 SAINT MAURICE L'EXIL (FR)**
• **PLENNEVAUX, Thomas**
  **69003 LYON (FR)**

(54) **OPTIMISATION DE L'UTILISATION D'HYDROGENE POUR L'HYDROTRAITEMENT DE CHARGES HYDROCARBONEES**

(57) Procédé d'hydrotraitement d'une charge hydrocarbonée dans lequel :

a) on réalise au moins une étape d'hydrotraitement dans laquelle on met en contact au moins une partie de ladite charge et un flux gazeux comprenant de l'hydrogène avec un catalyseur d'hydrotraitement pour obtenir un effluent hydrotraité (9,400) comprenant de l'hydrogène, des composés soufrés et azotés ;

b) on réalise une séparation gaz/liquide dudit effluent hydrotraité (9,400) pour produire un premier effluent gazeux (23,240) et un premier effluent liquide (11,600) ;

c) on détend le premier effluent liquide (11,600) et on sépare ledit premier effluent liquide (11,600) pour obtenir un deuxième effluent gazeux (41,410) et un deuxième effluent liquide (43,430) ;

d) on refroidit ledit deuxième effluent gazeux (41,410), puis on sépare ledit deuxième effluent gazeux (41,410) pour obtenir un troisième effluent gazeux (49,490) et un troisième effluent liquide (45,450) ;

e) on recycle une partie dudit troisième effluent gazeux (49,490).

**EP 3 124 577 A1**

**Description**

**Domaine technique**

La présente invention concerne l'hydrotraitement de coupes hydrocarbonées, et plus particulièrement de coupes essences ou de distillats moyens, pour produire des coupes hydrocarbonées à faible teneur en soufre, en azote et éventuellement en composés aromatiques.

**Etat de la technique**

Les charges hydrocarbonées (appelés aussi charges d'hydrocarbures), et plus particulièrement les coupes de type distillats moyens, provenant aussi bien de la distillation directe d'un pétrole brut ou issues d'un procédé de craquage catalytique, contiennent des quantités non négligeables d'impuretés.
De façon générale, ces impuretés sont éliminées par l'intermédiaire d'un procédé d'hydrotraitement permettant de réduire la présence de soufre ou d'autres hétéroatomes comme l'azote, mais aussi en diminuant la teneur en composés hydrocarbures aromatiques par hydrogénation pour augmenter l'indice de cétane.
En particulier, le procédé d'hydrotraitement de coupes hydrocarbonées a pour but d'éliminer les composés soufrés ou azotés contenus dans celles-ci afin de mettre par exemple un produit pétrolier aux spécifications requises (teneur en soufre, teneur en aromatiques etc..) pour une application donnée (carburant automobile, essence ou gazole, fioul domestique, carburéacteur). Le durcissement des normes de pollution automobile dans la communauté européenne a contraint les raffineurs à réduire très fortement la teneur en soufre dans les carburants diesel et les essences (au maximum 10 parties par million poids (ppm) de soufre au 1 er janvier 2009, contre 50 ppm au 1 er janvier 2005).
Les procédés d'hydrotraitement classiques utilisent généralement un réacteur en lit fixe, dans lequel un ou plusieurs lits catalytiques contenant un ou plusieurs catalyseurs d'hydrotraitement sont disposés. La charge et l'hydrogène sont généralement introduits en tête du réacteur et traversent le réacteur de haut en bas en co-courant descendant. Lorsque la charge et l'hydrogène traversent le réacteur, la réaction d'hydrotraitement permet de décomposer les impuretés, notamment les impuretés comportant du soufre ou de l'azote et éventuellement d'éliminer partiellement les composés hydrocarbures aromatiques et plus particulièrement les composés hydrocarbures polyaromatiques. La destruction des impuretés conduit à la production d'un produit hydrocarboné hydroraffiné et d'un gaz acide riche en $H_2S$ et en $NH_3$, gaz connus pour être des inhibiteurs et même dans certains cas des poisons des catalyseurs d'hydrotraitement. Les réactions d'hydrotraitement les plus faciles ont généralement lieu dans la partie haute du réacteur, puis deviennent de plus en plus difficiles au fur et à mesure que la charge et l'hydrogène traversent progressivement le réacteur. Cette perte en efficacité est due non seulement au fait que la charge d'hydrocarbures comporte des composés soufrés les plus réfractaires aux réactions d'hydrogénation mais également au fait que la phase gaz comprenant de l'hydrogène se charge en composés inhibiteurs ($NH_3$ et $H_2S$) qui diminue par conséquent la pression partielle d'hydrogène. Des quantités de catalyseurs importantes doivent donc être mises en place afin de compenser cette baisse de réactivité.
Pour remédier à cette difficulté, il est proposé généralement dans l'état de la technique d'opérer le procédé d'hydrotraitement en contre-courant simulé. Ce procédé met en oeuvre une succession de lits-fixes en co-courant mais avec une circulation globale de l'hydrogène et de la charge à contre-courant. Dans le cas de deux lits fixes successifs, la charge d'hydrocarbures est introduite dans le premier réacteur en co-courant avec de l'hydrogène non pur issu du deuxième réacteur. L'effluent liquide du premier réacteur d'hydrotraitement est séparé de la phase gaz contenant des impuretés ($H_2S$, $NH_3$) par flash ou stripage à l'hydrogène ou par tout autre moyen de séparation connu de l'homme du métier (par exemple un enchainement de flashs). Ce flux gazeux est purifié avant d'être réinjecté avec l'effluent liquide du premier réacteur dans un second réacteur d'hydrotraitement de finition. L'effluent liquide du second réacteur est séparé de la phase gaz contenant de l'hydrogène non pur chargé d'impuretés ($H_2S$, $NH_3$), l'hydrogène non pur étant par la suite recyclé dans le premier réacteur. Globalement, la circulation de l'hydrogène est à contre-courant de celle de la charge.
Que ce soit pour l'un ou l'autre des deux types de procédés d'hydrotraitement, i.e. en co-courant ou en contre-courant, la consommation en hydrogène nécessaire pour réaliser l'hydrotraitement de la charge est souvent mal maitrisée. En effet, en sortie des réacteurs d'hydrotraitement, une partie non négligeable d'hydrogène se retrouve dans les effluents liquides à l'état dissous et n'est pas récupérée afin d'être recyclée en amont des réacteurs d'hydrotraitement. Cette perte en hydrogène doit alors être compensée par un apport en hydrogène d'appoint, en plus de l'hydrogène d'appoint lié à la consommation chimique par les réactions d'hydrotraitement, afin de maintenir un taux de couverture en hydrogène constant.
La présente invention propose de modifier les configurations classiques d'hydrotraitement de charges d'hydrocarbures, aussi bien en co-courant qu'en contre-courant simulé, afin d'optimiser la consommation en hydrogène nécessaire pour les réactions d'hydrotraitement de telles charges. En effet, afin de maximiser la récupération en hydrogène non consommée à l'issue d'un procédé d'hydrotraitement, la Demanderesse a mis au point un procédé dans lequel l'effluent hydrotraité (i.e. en sortie du (dernier) réacteur d'hydrotraitement) est envoyé dans un enchaînement particulier d'étapes de séparation permettant d'améliorer la récupération de l'hydrogène non consommé en vue de son recyclage en amont du procédé d'hydrotraitement.

Le procédé selon l'invention comprend les étapes suivantes :

a) on réalise au moins une étape d'hydrotraitement dans laquelle on met en contact au moins une partie de ladite charge et un flux gazeux comprenant de l'hydrogène avec au moins un catalyseur d'hydrotraitement pour obtenir un effluent hydrotraité comprenant de l'hydrogène, des composés soufrés et azotés ;

b) on réalise une séparation gaz/liquide dudit effluent hydrotraité obtenu à l'étape a) pour produire au moins un premier effluent gazeux et au moins un premier effluent liquide ;

c) on détend le premier effluent liquide obtenue à l'étape b) à une pression comprise entre 0,5 et 4 MPa pour obtenir au moins un deuxième effluent gazeux comprenant de l'hydrogène, des composés soufrés et azotés, et au moins un deuxième effluent liquide ;

d) on refroidit ledit deuxième effluent gazeux obtenu à l'étape c), comprenant de l'hydrogène, des composés soufrés et azotés, puis on réalise une séparation dudit deuxième effluent gazeux pour obtenir au moins un troisième effluent gazeux comprenant de l'hydrogène, des composés soufrés et azotés, et au moins un troisième effluent liquide ;

e) on recycle au moins une partie dudit troisième effluent gazeux obtenu à l'étape d), comprenant de l'hydrogène, des composés soufrés et azotés, à l'étape a) en tant que flux gazeux comportant de l'hydrogène approvisionné à l'étape a).

## Objets de l'invention

La présente invention a pour objet un procédé d'hydrotraitement, de préférence en lit fixe, d'une charge hydrocarbonée comportant des composés soufrés et azotés, dans lequel on effectue les étapes suivantes :

a) on réalise au moins une étape d'hydrotraitement dans laquelle on met en contact au moins une partie de ladite charge et un flux gazeux comprenant de l'hydrogène avec au moins un catalyseur d'hydrotraitement pour obtenir un effluent hydrotraité comprenant de l'hydrogène, des composés soufrés et azotés ;

b) on réalise une séparation gaz/liquide dudit effluent hydrotraité obtenu à l'étape a) pour produire au moins un premier effluent gazeux et au moins un premier effluent liquide ;

c) on détend le premier effluent liquide obtenue à l'étape b) à une pression comprise entre 0,5 et 4 MPa et on sépare ledit premier effluent liquide pour obtenir au moins un deuxième effluent gazeux comprenant de l'hydrogène, des composés soufrés et azotés, et au moins un deuxième effluent liquide ;

d) on refroidit ledit deuxième effluent gazeux obtenu à l'étape c), comprenant de l'hydrogène, des composés soufrés et azotés, puis on sépare ledit deuxième effluent gazeux pour obtenir au moins un troisième effluent gazeux comprenant de l'hydrogène, des composés soufrés et azotés, et au moins un troisième effluent liquide ;

e) on recycle au moins une partie dudit troisième effluent gazeux obtenu à l'étape d), comprenant de l'hydrogène, des composés soufrés et azotés, à l'étape a) en tant que flux gazeux comportant de l'hydrogène approvisionné à l'étape a).

Avantageusement, lors de l'étape e), ladite partie dudit troisième effluent gazeux est mélangée avec un flux gazeux d'hydrogène d'appoint.

De préférence, on refroidit à l'étape d) ledit deuxième effluent gazeux à une température comprise entre 10 et 120°C.

Avantageusement, entre l'étape a) et b) du procédé selon l'invention, on refroidit l'effluent hydrotraité obtenu à l'étape a) à une température comprise entre 20 et 320°C.

Dans un premier mode de réalisation selon l'invention, l'étape a) d'hydrotraitement est réalisée dans une zone réactionnelle dans laquelle ladite charge et ledit flux gazeux comprenant de l'hydrogène circulent en co-courant descendant dans ladite zone réactionnelle pour obtenir un effluent hydrotraité comprenant de l'hydrogène, des composés soufrés et azotés.

Avantageusement, ledit premier effluent gazeux obtenu à l'étape b) est refroidi puis envoyé dans un ballon séparateur pour obtenir un courant gazeux, une fraction liquide hydrocarbonée et une phase liquide aqueuse.

De préférence, on envoie ledit troisième effluent gazeux comprenant de l'hydrogène, des composés soufrés et azotés, dans une unité de lavage comprenant une solution absorbante comportant des amines.

Avantageusement, ledit courant gazeux est envoyé dans l'unité de lavage comprenant une solution absorbante comportant des amines.

De préférence, le flux de tête issu de l'unité de lavage est recyclé en amont de la première zone réactionnelle en tant que flux gazeux comportant de l'hydrogène.

Dans un deuxième mode de réalisation selon l'invention, l'étape a) d'hydrotraitement est réalisée dans une première zone réactionnelle pour produire une charge partiellement hydrotraitée puis dans une deuxième zone réactionnelle pour obtenir un effluent hydrotraité comprenant de l'hydrogène, des composés soufrés et azotés.

Avantageusement, la première zone réactionnelle et la deuxième zone réactionnelle on réalise une étape de séparation de ladite charge partiellement hydrotraitée comprenant de l'hydrogène, des composés soufrés et azotés, pour produire au moins une fraction gazeuse et une fraction liquide.

De préférence, entre ladite fraction liquide est envoyée dans ladite deuxième zone réactionnelle, et ladite fraction gazeuse est refroidie puis envoyée dans un ballon séparateur pour obtenir un courant gazeux, une fraction liquide hydrocarbonée et une phase liquide aqueuse.

Préférentiellement, on envoie ledit troisième effluent gazeux comprenant de l'hydrogène, des composés soufrés et azotés, dans une unité de lavage comprenant une solution absorbante comportant des amines.

Avantageusement, ledit courant gazeux est envoyé dans l'unité de lavage comprenant une solution absorbante comportant des amines et le flux de tête issu de l'unité de lavage est recyclé en amont de la seconde zone réactionnelle en tant que flux gazeux comportant de l'hydrogène.

De préférence, le premier effluent gazeux obtenu à l'étape d) est envoyé en amont de la première zone réactionnelle.

**Description des figures**

La figure 1 est une représentation d'un schéma de procédé d'une installation d'hydrotraitement selon l'état de la technique dans lequel la charge et l'hydrogène circulent globalement en contre-courant (contre-courant simulé).

La figure 2 est une représentation d'un schéma de procédé d'une installation d'hydrotraitement selon l'invention dans lequel la charge et l'hydrogène circulent globalement en contre-courant (contre-courant simulé). Sur cette figure, des références identiques à celles de la figure 1 désignent des éléments similaires ou identiques.

La figure 3 est une représentation d'un schéma de procédé d'hydrotraitement selon l'état de la technique dans lequel la charge et l'hydrogène circulent en co-courant dans une seule zone réactionnelle.

La figure 4 est une représentation d'un schéma de procédé d'une installation d'hydrotraitement selon l'invention dans lequel la charge et l'hydrogène circulent en co-courant dans une seule zone réactionnelle. Sur cette figure, des références identiques à celles de la figure 3 désignent des éléments similaires ou identiques.

**Description détaillée de l'invention**

La présente invention concerne un procédé d'hydrotraitement, de préférence en lit fixe. On entend par « hydrotraitement » toute réaction permettant d'éliminer les impuretés de la charge (appelée aussi ici coupe), et notamment des réactions d'hydrodésulfuration, d'hydrodéazotation, mais également des réactions d'hydrogénation des insaturations et/ou des noyaux aromatiques (hydrodéaromatisation) ainsi que des réactions d'hydrocraquage qui conduisent à l'ouverture de cycle naphténique ou le fractionnement de paraffines en plusieurs fragments de plus faible poids moléculaire.

La présente invention s'applique aussi bien au procédé d'hydrotraitement en contre-courant simulé (i.e. que la charge et l'hydrogène circulent dans une succession de lits, de préférence de lits-fixes, en co-courant mais avec une circulation globale de l'hydrogène et de la charge à contre-courant), qu'au procédé d'hydrotraitement plus classique dans laquelle la charge et l'hydrogène circulent globalement en co-courant.

Une charge typique du procédé selon l'invention est une charge de distillats moyens. Au sens de la présente description, le terme distillat moyen désigne des coupes hydrocarbonées bouillant dans la gamme d'environ 130°C à environ 410°C, généralement d' environ 140°C à environ 375°C et par exemple d' environ 150°C à environ 370°C. Une charge de distillats moyens peut également comprendre une coupe gazole ou diesel, ou être désignée par l'une de ces appellations.

Le procédé de la présente invention peut également trouver une application dans le traitement des coupes hydrocarbonées issues de la distillation directe du pétrole ayant un point d'ébullition situé dans la gamme des naphtas. Le procédé peut être utilisé pour produire des coupes hydrocarbonées utilisables comme solvants ou comme diluants et contenant préférentiellement une teneur réduite en composés aromatiques ; le terme naphta désigne une fraction hydrocarbonée allant des hydrocarbures ayant de 5 atomes de carbone aux hydrocarbures ayant un point d'ébullition final d'environ 210°C.

Le procédé peut également être utilisé pour l'hydrotraitement et la désulfuration d'essence, en particulier d'essence produite dans une installation de craquage catalytique en lit fluidisé (selon le procédé connu sous l'appellation FCC), ou d'autres fractions essence provenant par exemple d'unités de cokéfaction, viscoréduction, ou hydroconversion de résidu, le terme essence désigne une fraction hydrocarbonée provenant d'une unité de craquage, bouillant entre environ 30°C et environ 210°C.

Une autre charge possible est le kérosène. Le terme kérosène désigne une coupe hydrocarbonée bouillant dans la gamme 130°C à 250°C environ.

Le procédé selon l'invention peut également être utilisé pour l'hydrotraitement de coupes plus lourdes, telles que le distillat sous vide bouillant dans la gamme 370°C à 565°C environ.

Le procédé selon l'invention peut également être utilisé pour l'hydrotraitement de coupes plus lourdes que le distillat sous vide, en particulier des coupes d'huile désasphaltée.

Le terme huile désasphaltée désigne une coupe bouillant au-dessus de 565°C environ (ou d'une température légèrement plus basse telle que 525°C environ), obtenue par désasphaltage d'un résidu lourd, par exemple de résidu sous vide, par un solvant de type propane, butane, pentane, essence légère ou tout autre solvant approprié connu de l'homme du métier.

Le procédé peut enfin être utilisé pour l'hydrotraitement d'une coupe d'hydrocarbures plus large, résultant par exemple (non limitatif) d'un mélange d'au moins deux des coupes hydrocarbonées précédemment définies.

### Procédé d'hydrotraitement en contre-courant simulé

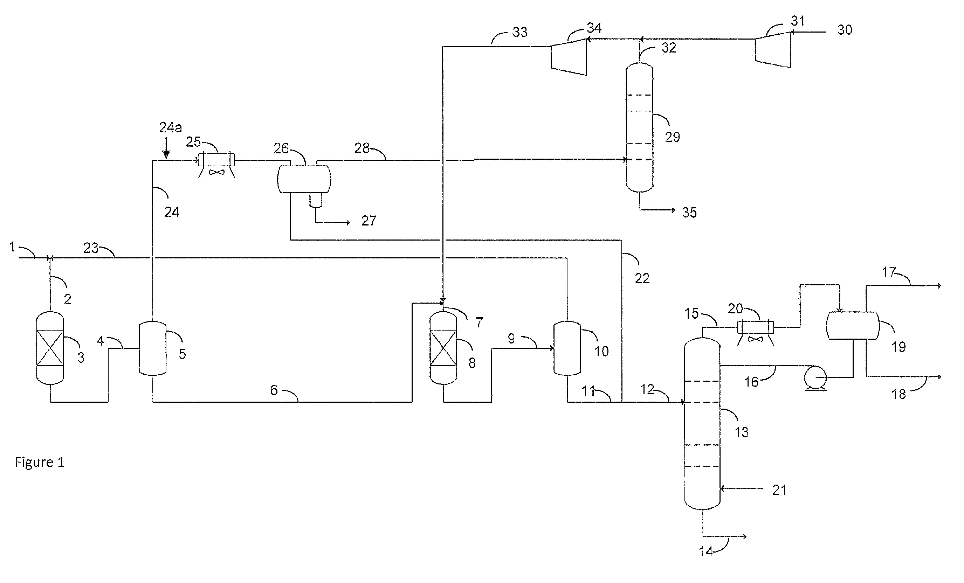

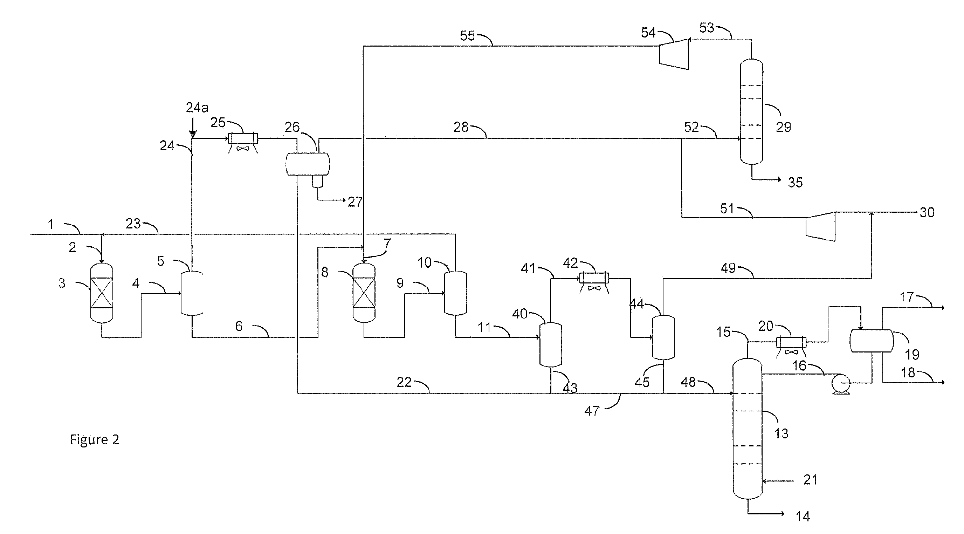

De manière à mieux comprendre l'invention, la description donnée ci-après à titre d'exemple d'application concerne d'une part un procédé d'hydrotraitement connu de l'état de la technique dans laquelle la charge et l'hydrogène circulent globalement en contre-courant (cf. figure 1), et d'autre part un procédé d'hydrotraitement selon l'invention dans laquelle la charge et l'hydrogène circulent globalement en contre-courant (cf. figure 2).

On se réfère maintenant à la figure 1 qui représente un schéma d'un procédé d'installation d'hydrotraitement connu de l'état de la technique, dans lequel la charge à hydrotraiter et l'hydrogène circulent globalement en contre-courant (contre-courant simulé).

La charge de l'installation d'hydrotraitement est alimentée par la ligne 1, puis est réchauffée dans un four (non représenté sur la figure) dans lequel la température de la charge est portée à la température requise pour la première étape réactionnelle d'hydrotraitement. La charge est additionnée d'un courant gazeux de recyclage, riche en hydrogène, circulant dans la ligne **23** en amont ou en aval du four (non représenté sur la figure). Le mélange ainsi formé circule dans la ligne **2**, puis alimente le réacteur d'hydrotraitement **3** (appelé aussi ici première zone réactionnelle **3**) qui est typiquement un réacteur à lit catalytique fixe et courant descendant. L'effluent de ce réacteur, i.e. la charge partiellement hydrotraitée, est évacué par le conduit **4** pour être introduit dans un ballon séparateur **5**. Le ballon **5** permet de séparer une fraction gazeuse **24** et une fraction liquide **6**. La fraction gazeuse **24** est refroidie via un ou plusieurs échangeur(s) de chaleur **25** (ici un aéroréfrigérant) pour être partiellement condensée avant d'être séparée dans un ballon séparateur **26** de type gaz/liquide/liquide. Un flux d'eau **24a** est préférentiellement ajouté à la fraction gazeuse **24** pour permettre la dissolution du $NH_3$ présent dans la fraction gazeuse dans une phase liquide aqueuse.

Le ballon séparateur **26** réalise une séparation en trois phases :

- un courant gazeux **28** ;
- une fraction liquide hydrocarbonée **22,** de teneur en soufre très basse, par exemple inférieure à 10 ppm, ladite fraction étant évacuée en aval du procédé (i.e. qu'elle n'est pas traitée dans la deuxième étape réactionnelle d'hydrotraitement) ; et
- une phase liquide aqueuse **27,** contenant par ailleurs généralement des impuretés azotées et soufrées (telles que des sels de sulfure d'ammonium).

Le courant gazeux **28,** comprenant de l'hydrogène et des gaz acides, est introduit dans une unité de lavage aux amines **29.**

Le flux riche en hydrogène **32** issu de l'unité de lavage aux amines **29** est ensuite comprimé via un compresseur **34,** puis le flux compressé **33** est envoyé vers un deuxième réacteur d'hydrotraitement **8** (appelé aussi ici deuxième zone réactionnelle **8**), ensemble avec la fraction liquide **6** via la ligne **7,** pour produire un effluent hydrotraité **9** comprenant de l'hydrogène, des composés soufrés et azotés. L'effluent hydrotraité **9** est évacué pour être introduite dans un ballon séparateur **10** dit « séparateur gaz/liquide de deuxième étape réactionnelle » afin d'obtenir un effluent liquide **11** et un effluent gazeux **23**. L'effluent gazeux **23,** comprenant de l'hydrogène, est recyclé en amont de la première étape réactionnelle d'hydrotraitement. L'effluent liquide **11** et éventuellement la fraction liquide hydrocarbonée **22** sont envoyés via la ligne **12** vers une unité de stripage **13** (appelée aussi ici colonne de stripage) alimentée par de la vapeur d'eau de stripage **21**. La fraction gazeuse **15** est récupérée en tête de la colonne de stripage **13,** puis est refroidie via un ou plusieurs échangeur(s) de chaleur **20** (ici un aéroréfrigérant) avant d'être introduit dans un ballon séparateur **19** afin d'obtenir un flux gazeux **17,** comprenant principalement, de l'hydrogène, de l'H$_2$S et des hydrocarbures légers tel que du méthane, un flux liquide **18** comprenant principalement des composés de type naphta, et un flux liquide **16** envoyé dans la colonne de stripage **13** à titre de reflux. La fraction lourde **14,** comprenant la charge hydrocarbonée hydrotraitée de distillats moyens, est récupérée en fond de la colonne de stripage **13.**

Dans le cadre d'un procédé d'hydrotraitement en contre-courant simulé selon l'état de la technique, tel qu'illustré sur la figure 1, une partie non négligeable d'hydrogène n'est pas récupérée et se retrouve à l'état dissous dans l'effluent liquide **11** car l'étape de séparation gaz/liquide réalisée dans le ballon séparateur **10** en sortie du deuxième réacteur **8** est réalisée à pression et à température dudit réacteur **8,** soit typiquement à une température de 360°C et à une pression comprise entre 3 et 13 MPa dans le cadre des coupes de distillats moyens à très faible teneur en soufre. L'effluent liquide **11,** à la température et à la pression de sortie du réacteur **8,** comprend alors une partie d'hydrogène non consommé sous forme dissoute qui n'est pas réutilisée. La quantité d'hydrogène dissous dépend de la température et plus particulièrement de la pression du réacteur ; la solubilité de l'hydrogène dans la phase liquide étant directement proportionnelle à la pression du réacteur (loi de Henry). La perte en hydrogène par dissolution correspond à l'hydrogène présent dans la conduite **12** en entrée de la colonne de stripage **13** et en sortie **35** de l'unité de lavage aux amines. Pour pallier cette perte en hydrogène, et également la perte en hydrogène due à la consommation chimique en hydrogène de la réaction d'hydrotraitement, de l'hydrogène d'appoint **30** est généralement introduit dans le procédé entre la première et la seconde zone réactionnelle, ensemble avec le flux riche en hydrogène **32** issu de l'unité de lavage aux amines **29.** L'hydrogène est de préférence comprimé via un compresseur **31** avant d'être mélangé avec le flux **32.**

Afin de maximiser la récupération en hydrogène non consommée à l'issue du procédé d'hydrotraitement, la Demanderesse a mis au point un procédé dans lequel l'effluent issu de l'hydrotraitement subit un enchaînement particulier d'étapes de séparation permettant de réduire de manière significative la teneur en hydrogène comprise dans la charge hydrotraitée aux spécification requises, et donc permettant d'améliorer le recyclage en hydrogène en amont du procédé d'hydrotraitement.

Plus particulièrement, en se référant à la figure 2, représentant un schéma de procédé d'une installation d'hydrotraitement selon l'invention, la charge, par exemple une coupe de distillats moyens de distillation directe, est alimentée par la ligne **1,** puis est réchauffée dans un four (non représenté sur la figure) dans lequel la température de la charge est portée à la température requise pour la première étape réactionnelle d'hydrotraitement. La charge est par la suite additionnée d'un courant gazeux de recyclage (en amont ou en aval du four), riche en hydrogène, circulant dans la ligne **23.** Le mélange ainsi formé circule dans la ligne **2,** puis alimente le réacteur d'hydrotraitement **3** qui est typiquement un réacteur à lit catalytique fixe et courant descendant. L'effluent de ce réacteur, i.e. la charge partiellement hydrotraitée, est évacué par le conduit **4** pour être introduit dans un ballon séparateur **5.** Le ballon **5** permet de séparer une fraction gazeuse **24** et une fraction liquide **6.** La fraction gazeuse **24** est refroidie via un ou plusieurs échangeur(s) de chaleur **25** (ici un aéroréfrigérant) pour être partiellement condensée avant d'être séparée dans un ballon séparateur **26** de type gaz/liquide/liquide. Un flux d'eau **24a** est préférentiellement ajouté à la fraction gazeuse **24** pour permettre la dissolution du NH$_3$ présent dans la fraction gazeuse dans une phase liquide aqueuse.

Le ballon séparateur **26** réalise une séparation en trois phases :

- un courant gazeux **28** ;
- une fraction liquide hydrocarbonée **22,** de teneur en soufre très basse, par exemple inférieure à 10 ppm, ladite fraction étant évacuée en aval du procédé (i.e. qu'elle n'est pas traitée dans la deuxième étape réactionnelle d'hydrotraitement) ; et
- une phase liquide aqueuse **27,** contenant par ailleurs généralement des impuretés azotées et soufrées (telles que des sels de sulfure d'ammonium).

Le courant gazeux **28,** comprenant de l'hydrogène et des gaz acides, est introduit dans une unité de lavage aux amines **29** via la ligne **52,** ensemble avec un flux gazeux **51** comprenant éventuellement un mélange d'hydrogène d'appoint **30** et d'un effluent gazeux **49** (appelé ici troisième effluent gazeux) issu de la deuxième zone réactionnelle d'hydrotraitement. Le flux riche en hydrogène **53** issu de l'unité de lavage aux amines **29** est comprimé par un compresseur **54,** puis envoyé via la ligne **55** vers la deuxième zone de réaction d'hydrotraitement **8,** ensemble avec la fraction liquide **6,** via la ligne **7,** pour obtenir un effluent hydrotraité **9** comprenant de l'hydrogène, des composés soufrés et azotés. L'appoint en hydrogène **30** est apporté au procédé pour compenser la consommation en hydrogène par les réactions d'hydrotraitement. L'appoint en hydrogène **30** est introduit et mélangé avec le troisième effluent gazeux **49.**

L'effluent hydrotraité **9** est éventuellement refroidi en sortie de la deuxième zone de réaction d'hydrotraitement **8,** via un ou plusieurs échangeur(s) de chaleur (non représenté(s) sur la figure) à une température comprise de préférence entre 20 et 320°C, et plus préférentiellement entre 180 et 280°C. L'effluent hydrotraité **9,** éventuellement refroidi, est ensuite évacué pour être introduit dans un ballon séparateur **10** dit « séparateur gaz/liquide de deuxième étape réactionnelle » afin d'obtenir un effluent liquide **11** et un effluent gazeux **23.** L'effluent gazeux **23,** comprenant de l'hydrogène, est recyclé en amont de la première étape réactionnelle d'hydrotraitement.

L'effluent liquide **11** est ensuite détendu en étant introduit dans un ballon séparateur **40** pour obtenir un deuxième effluent gazeux **41** comprenant de l'hydrogène, des composés soufrés et azotés, et au moins un deuxième effluent liquide **43**. La pression du ballon **40** est comprise entre 0,5 et 4 MPa, de manière préférée entre 1 et 3 MPa. La pression du ballon **40** est régulée de telle sorte qu'elle soit environ égale à la pression de l'hydrogène d'appoint **30** et en prenant compte des pertes de charge engendrées par l'échangeur de chaleur **42**. Le deuxième effluent gazeux **41** est refroidi via un échangeur de chaleur **42** (ici un aéroréfrigérant) de préférence à une température comprise entre 10 et 120°C, et plus préférentiellement entre 30 et 90°C, pour être au moins partiellement condensé et est introduit dans un ballon séparateur **44**, dit ballon de flash, afin d'obtenir un troisième effluent gazeux **49** comprenant de l'hydrogène, des composés soufrés et azotés, et un troisième effluent liquide **45**. La pression du ballon **44** est régulée de telle sorte qu'elle soit comprise entre 0,5 et 4 MPa, de manière préférée entre 1 et 3 MPa, i.e. sensiblement égale à la pression de l'hydrogène d'appoint **30** en prenant compte les pertes de charges engendrées par l'échangeur de chaleur **42**.

Le troisième effluent gazeux **49** est envoyé vers l'unité de lavage aux amines **29**. Le troisième effluent liquide **45**, est envoyé en entrée d'une unité de stripage **13** (appelée aussi ici la colonne de stripage **13**) via la conduite **48**, éventuellement ensemble avec le deuxième effluent liquide **43** issu du ballon séparateur **40**, (via les conduites **47** et **48**), et éventuellement ensemble ave la fraction liquide hydrocarbonée **22** issue du ballon séparateur **26** (via les conduites **47** et **48**). La colonne de stripage **13** est alimentée par de la vapeur d'eau de stripage **21**. La fraction gazeuse **15** est récupérée en tête de la colonne de stripage **13**, puis est refroidie via un ou plusieurs échangeur(s) de chaleur **20** (ici un aéroréfrigérant) avant d'être introduit dans un ballon séparateur **19** afin d'obtenir un flux gazeux **17**, comprenant principalement, de l'hydrogène, de l'$H_2S$ et des hydrocarbures légers tel que du méthane, un flux liquide **18** comprenant principalement des composés de type naphta, et un flux liquide **16** envoyé dans la colonne de stripage **13** à titre de reflux. La fraction lourde **14**, comprenant la charge hydrotraitée de distillats moyens, est récupérée en fond de la colonne de stripage **13**.

Ainsi, dans le cas d'un procédé d'hydrotraitement en contre-courant simulé selon l'invention, l'hydrogène non consommé dissous dans l'effluent liquide issu de la deuxième zone réactionnelle **8**, est récupéré grâce aux étapes de séparation réalisées successivement dans les ballons séparateurs **40** et **44**, afin d'obtenir un effluent gazeux **49** riche en hydrogène, pouvant ainsi être recyclé en amont du procédé en tant que flux gazeux comprenant de l'hydrogène pour la réalisation de l'hydrotraitement de la charge hydrocarbonée.

## Procédé d'hydrotraitement en co-courant

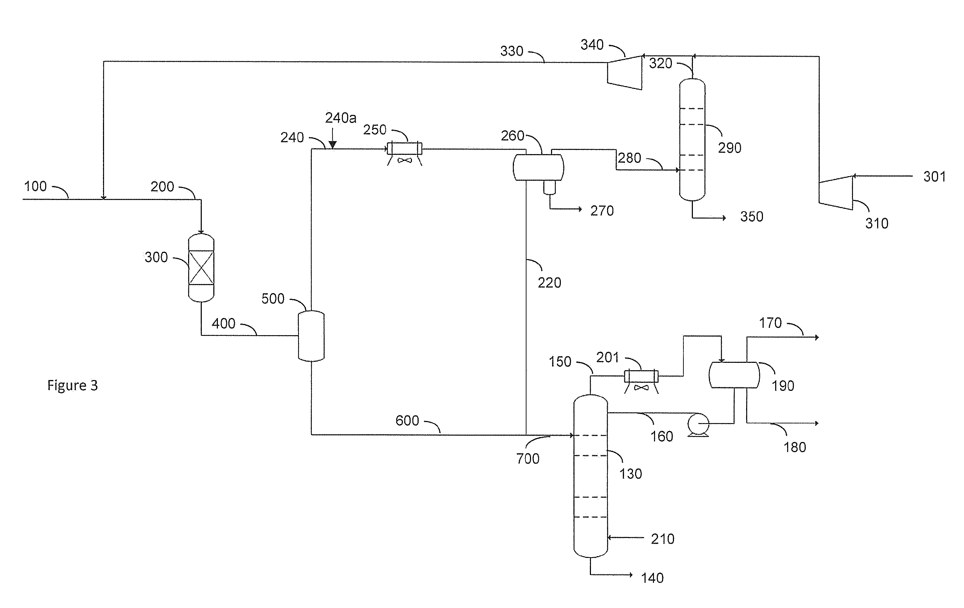

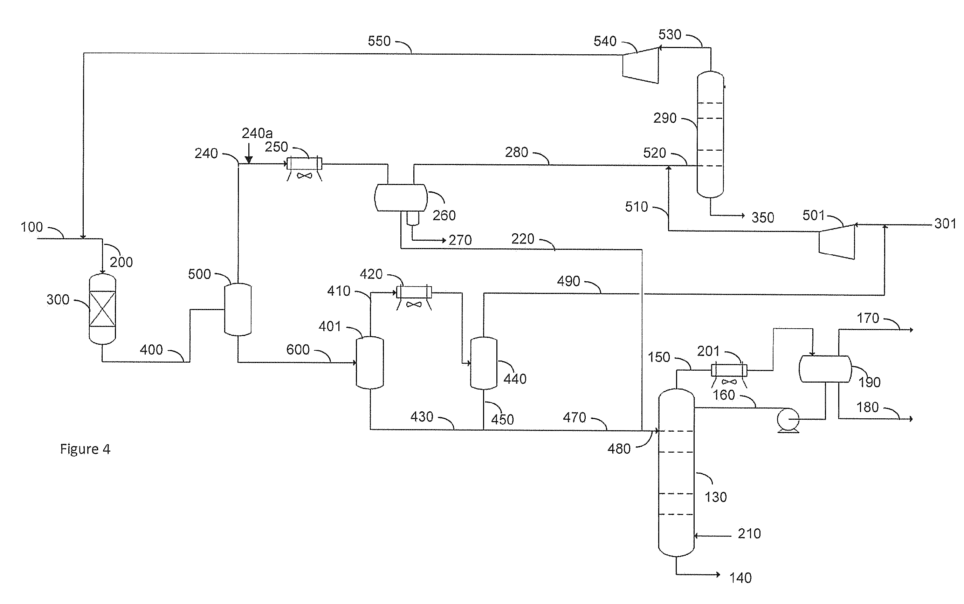

De manière à mieux comprendre l'invention, la description donnée ci-après à titre d'exemple d'application concerne d'une part un procédé d'hydrotraitement connu de l'état de la technique dans laquelle la charge et l'hydrogène circulent en co-courant (cf. figure 3), et d'autre part un procédé d'hydrotraitement selon l'invention dans laquelle la charge et l'hydrogène circulent en co-courant (cf. figure 4).

On se réfère maintenant à la figure 3 qui représente un schéma d'un procédé d'installation d'hydrotraitement connu de l'état de la technique, dans lequel la charge à hydrotraiter et l'hydrogène circule en co-courant dans une seule zone réactionnelle d'hydrotraitement.

La charge de l'installation d'hydrotraitement, par exemple une coupe de distillats moyens de distillation directe, est alimentée par la ligne **100**, puis est réchauffée dans un four (non représenté sur la figure) dans lequel la température de la charge est portée à la température requise pour l'étape réactionnelle d'hydrotraitement. La charge est par la suite additionnée d'un courant gazeux de recyclage (en amont ou en aval du four), riche en hydrogène, circulant dans la ligne **330**. Le mélange ainsi formé circule dans la ligne **200**, puis alimente le réacteur d'hydrotraitement **300** (appelé aussi ici zone réactionnelle d'hydrotraitement **300**) qui est typiquement un réacteur à lit catalytique fixe et courant descendant. L'effluent de ce réacteur est évacué par le conduit **400** pour être introduit dans un ballon séparateur **500**. Le ballon **500** permet de séparer un effluent gazeux **240** et un effluent liquide **600**. L'effluent gazeux **240** est refroidi via un ou plusieurs échangeur(s) de chaleur **250** (ici un aéroréfrigérant) pour être au moins partiellement condensé avant d'être séparé dans un ballon séparateur **260** de type gaz/liquide/liquide. Un flux d'eau **240a** est préférentiellement ajouté à l'effluent gazeux **240** pour permettre la dissolution du $NH_3$ présent dans la fraction gazeuse dans une phase liquide aqueuse.

Le ballon séparateur **260** réalise une séparation en trois phases :

- un courant gazeux **280** ;
- une fraction liquide hydrocarbonée **220**, de teneur en soufre très basse, par exemple inférieure à 10 ppm ; et
- une phase liquide aqueuse **270**, contenant par ailleurs généralement des impuretés azotées et soufrées (telles que des sels de sulfure d'ammonium).

Le courant gazeux **280**, comprenant de l'hydrogène et des gaz acides, est introduit dans une unité de lavage aux amines **290**. Le flux riche en hydrogène **320** issu de l'unité de lavage aux amines **290** est mélangé avec un appoint en hydrogène **301** comprimé par un compresseur **310,** le mélange **330** étant ensuite comprimé dans un compresseur **340** puis recyclé en amont de la zone réactionnelle d'hydrotraitement. L'effluent liquide **600** et éventuellement la fraction liquide hydrocarbonée **220** sont envoyés via la ligne **700** vers une colonne de stripage **130** alimentée par de la vapeur d'eau de stripage **210.** La fraction gazeuse **150** est récupérée en tête de la colonne de stripage **130,** puis est refroidie via un ou plusieurs échangeur(s) de chaleur **201** (ici un aéroréfrigérant) avant d'être introduit dans un ballon séparateur **190** afin d'obtenir un flux gazeux **170,** comprenant principalement, de l'hydrogène, de l'H$_2$S et des hydrocarbures légers tels que du méthane, un flux liquide **180** comprenant principalement des composés de type naphta, et un flux liquide **160** envoyé dans la colonne de stripage **130** à titre de reflux. La fraction lourde **140,** comprenant la coupe hydrotraitée de distillats moyens, est récupérée en fond de la colonne de stripage **130.** Dans le cadre d'un procédé d'hydrotraitement en co-courant classique selon l'état de la technique, tel qu'illustré sur la figure 3, une fraction non négligeable d'hydrogène n'est pas récupérée et se retrouve à l'état dissous dans l'effluent liquide **600** car l'étape de séparation gaz/liquide en sortie de la zone réactionnelle d'hydrotraitement dans le réacteur **300** est réalisée à pression et à température dudit réacteur **300,** soit typiquement à une température de 360°C et à une pression comprise entre 3 et 13 MPa dans le cadre des coupes de distillats moyens à très faible teneur en soufre. L'effluent liquide **600,** à la température et à la pression de sortie du réacteur **300,** comprend alors une partie d'hydrogène non consommée sous forme dissoute qui n'est pas réutilisée. La perte en hydrogène par dissolution correspond donc à l'hydrogène présent dans la conduite **700** en entrée de la colonne de stripage **130** et en sortie **350** de l'unité de lavage aux amines. Pour pallier cette perte en hydrogène, et également la perte en hydrogène due à la consommation chimique en hydrogène de la réaction d'hydrotraitement, de l'hydrogène d'appoint **301** est généralement introduit dans le procédé en amont de la zone réactionnelle d'hydrotraitement, ensemble avec le flux riche en hydrogène **320** issu de l'unité de lavage aux amines **290,** après avoir été comprimé via le compresseur **301.**

Afin de maximiser la récupération en hydrogène non consommée à l'issue du procédé d'hydrotraitement, la Demanderesse a mis au point un procédé dans lequel l'effluent issu de l'hydrotraitement subit un enchaînement particulier d'étapes de séparation permettant de réduire de manière significative la teneur en hydrogène comprise dans la charge hydrotraitée aux spécification requises, et donc permettant d'améliorer le recyclage en hydrogène en amont du procédé d'hydrotraitement.

Plus particulièrement, en se référant à la figure 4, représentant un schéma de procédé d'une installation d'hydrotraitement selon l'invention, la charge de l'installation d'hydrotraitement, par exemple une coupe de distillats moyens de distillation directe, est alimentée par la ligne **100,** puis est réchauffée dans un four (non représenté sur la figure) dans lequel la température de la charge est portée à la température requise pour l'étape réactionnelle d'hydrotraitement. La charge est par la suite additionnée d'un courant gazeux de recyclage (en amont ou en aval du four), riche en hydrogène, circulant dans la ligne **550.** Le mélange ainsi formé circule dans la ligne **200,** puis alimente le réacteur d'hydrotraitement **300** (appelé aussi ici zone réactionnelle d'hydrotraitement **300**) qui est typiquement un réacteur à lit catalytique fixe et courant descendant. L'effluent hydrotraité **400** est éventuellement refroidi en sortie de la zone réactionnelle d'hydrotraitement **300** ,via un ou plusieurs échangeur(s) de chaleur (non représenté(s) sur la figure) à une température comprise de préférence entre 20 et 320°C, et plus préférentiellement entre 180 et 280°C. L'effluent hydrotraité **400,** éventuellement refroidi, est ensuite évacué pour être introduit dans un ballon séparateur **500.** Le ballon **500** permet de séparer un premier effluent gazeux **240** et un premier effluent liquide **600.** Le premier effluent gazeux **240** est refroidi via un ou plusieurs échangeur(s) de chaleur **250** (ici un aéroréfrigérant) pour être partiellement condensé avant d'être séparé dans un ballon séparateur **260** de type gaz/liquide/liquide. Un flux d'eau **240a** est préférentiellement ajouté à l'effluent gazeux **240** pour permettre la dissolution du NH$_3$ présent dans la fraction gazeuse dans une phase liquide aqueuse.

Le ballon séparateur **260** réalise une séparation en trois phases :

- un courant gazeux **280** ;
- une fraction liquide hydrocarbonée **220,** de teneur en soufre très basse, par exemple inférieure à 10 ppm ; et
- une phase liquide aqueuse **270,** contenant par ailleurs généralement des impuretés azotées ou soufrées (telles que des sels de sulfure d'ammonium).

Le courant gazeux **280,** comprenant de l'hydrogène et des gaz acides, est introduit via la ligne **520** dans une unité de lavage aux amines **290,** ensemble avec un flux gazeux **510** comprenant l'effluent gazeux **490** (appelé ici troisième effluent gazeux) compressé via le compresseur **510,** et éventuellement additionné d'un appoint en hydrogène **301.**

Le flux riche en hydrogène **530** issu de l'unité de lavage aux amines **290** est comprimé par un compresseur **540** puis recyclé en amont de la zone réactionnelle d'hydrotraitement via la ligne **550.**

Le premier effluent liquide **600** est quant à lui détendu en étant introduit dans un ballon séparateur **401** pour obtenir un deuxième effluent gazeux **410** comprenant de l'hydrogène, des composés soufrés et azotés, et au moins un deuxième effluent liquide **430.**

La pression du ballon séparateur **401** est comprise entre 0,5 et 4 MPa, de manière préférée entre 1 et 3 MPa.

La pression du ballon **401** est régulée de telle sorte qu'elle soit environ égale à la pression de l'hydrogène d'appoint **301** et en prenant compte des pertes de charge engendrées par l'échangeur de chaleur **420**. Le deuxième effluent gazeux **410** est refroidi via un échangeur de chaleur **420** (ici un aéroréfrigérant) de préférence à une température comprise entre 10 et 120°C, et plus préférentiellement entre 30 et 90°C, pour être au moins partiellement condensé et est introduit dans un ballon séparateur **440,** dit ballon de flash, afin d'obtenir un troisième effluent gazeux **490** comprenant de l'hydrogène, des composés soufrés et azotés, et un troisième effluent liquide **450**. La pression du ballon **440** est régulée de telle sorte qu'elle soit comprise entre 0,5 et 4 MPa, de manière préférée entre 1 et 3 MPa, i.e. sensiblement égale à la pression de l'hydrogène d'appoint **301** en prenant compte les pertes de charges engendrées par l'échangeur de chaleur **420**.

Le troisième effluent gazeux **490** est envoyé vers l'unité de lavage aux amines **290**, tel que décrit ci-avant. Le troisième effluent liquide **450,** est envoyé en entrée de la colonne de stripage **130** via les conduites **470** et **480,** éventuellement ensemble avec le deuxième effluent liquide **430** issu du ballon séparateur **401,** et éventuellement ensemble avec la fraction liquide hydrocarbonée **220** issue du ballon séparateur **260**. La colonne de stripage **130** alimentée par de la vapeur d'eau de stripage **210**. La fraction gazeuse **150** est récupérée en tête de la colonne de stripage **130,** puis est refroidie via un ou plusieurs échangeur(s) de chaleur **201** (ici un aéroréfrigérant) avant d'être introduit dans un ballon séparateur **190** afin d'obtenir un flux gazeux **170,** comprenant principalement, de l'hydrogène, de l'H$_2$S et des hydrocarbures légers tel que du méthane, un flux liquide **180** comprenant principalement des composés de type naphta, et un flux liquide **160** envoyé dans la colonne de stripage **130** à titre de reflux. La fraction lourde **140,** comprenant principalement la charge hydrotraitée de distillats moyens, est récupérée en fond de la colonne de stripage **130**.

Ainsi, dans le cas d'un procédé d'hydrotraitement en co-courant selon l'invention, l'hydrogène non consommé issue du réacteur d'hydrotraitement **300,** est récupéré grâce aux étapes de séparation réalisées successivement dans les ballons séparateurs **401** et **440,** afin d'obtenir un effluent gazeux **490** riche en hydrogène (appelé aussi ici troisième effluent gazeux **490**), pouvant ainsi être recyclé en amont du procédé en tant que flux gazeux comprenant de l'hydrogène pour la réalisation de l'hydrotraitement de la charge hydrocarbonée.

## Exemples

Dans l'exemple suivant, on compare la perte en hydrogène dissous dans un schéma de procédé d'hydrodésulfuration à très basse teneur en soufre (teneur en soufre cible : 10 ppm poids) connu de l'état de la technique dans lequel la charge et l'hydrogène circulent globalement en contre-courant (tel que représenté en figure 1) et dans le cadre d'un procédé d'hydrodésulfuration à très basse teneur en soufre selon l'invention dans lequel la charge et l'hydrogène circulent globalement en contre-courant (tel que représenté en figure 2).

La charge traitée dans les deux configurations est un mélange d'une coupe gazole provenant de la distillation directe d'un pétrole brut et d'une coupe gazole de craquage catalytique. La composition de la charge est décrite plus en détail dans le tableau 1 ci-après.

Tableau 1 : Composition de la charge

| Nature de la charge | % en poids SR(*) / LCO(**) | 80/20 |
|---|---|---|
| Soufre initial | teneur en ppm poids | 9063 |
| Azote initial | teneur en ppm poids | 266 |
| (*) SR : Straight Run (Coupe gazole provenant de la distillation directe d'un pétrole brut) (**) LCO : Light Cycle Oil (Gazole de craquage catalytique) | | |

### Exemple 1 : Procédé d'hydrotraitement selon la figure 1 (exemple comparatif)

Conditions opératoires dans les réacteurs **3** et **8** (cf. figure 1):

Température d'hydrotraitement = 355°C ;
Pression d'hydrotraitement = 4 MPa ;
Vitesse Volumique Horaire (V.V.H.) = 0,85 h$^{-1}$ ;
Température du ballon séparateur **10** = 358°C.

Dans le cadre du procédé selon la figure 1, la perte totale en hydrogène dissous, retrouvée et mesurée dans les lignes **12** et **35** (cf. figure 1) est de 226 kg/h.

**Exemple 2 : Procédé d'hydrotraitement selon la figure 2 (selon l'invention)**

Conditions opératoires dans les réacteurs **3** et **8** (cf. figure 2):

Température d'hydrotraitement = 355°C ;
Pression d'hydrotraitement = 4 MPa ;
Vitesse Volumique Horaire (V.V.H.) = 0,85 h$^{-1}$ ;
Température du ballon séparateur **10** = 358°C ;
Température de la colonne de stripage **13** = 260°C ;
Pression du ballon séparateur **40** = 2,1 MPa ;
Température du ballon **44** = 50°C ;

$$\text{Rapport } H_2/HC = 168 \text{ Nm}^3/\text{Sm}^3.$$

On définit $H_2/HC$ comme le rapport volumique entre l'hydrogène (en Normaux m$^3$, c'est-à-dire en m$^3$ à 0°C et 0,1 MPa (1bar)) et les composés hydrocarbonés (en Standard m$^3$, c'est-à-dire en m$^3$ à 15°C et 0,1 MPa (1bar)).
Dans le cadre du procédé selon la figure 2, la perte totale en hydrogène dissous, retrouvée et mesurée dans les lignes **48** et **35** est de 106 kg/h.
Le tableau 2 ci-après résume les pertes en $H_2$ dans le cadre du procédé selon l'état de la technique (figure 1) et selon l'invention (figure 2) ainsi que le coût associé à la perte en hydrogène sur une durée de 20 ans (à raison de 8000 h/an et un coût en hydrogène fixé à 1800 €/t).

Tableau 2 : Perte en $H_2$ (kg/h) et coût associé

| Procédé d'hydrotraitement en contre-courant simulé | Pertes en $H_2$ (kg/h) | Coût sur 20 ans (M€) |
|---|---|---|
| Selon l'état de la technique (figure 1) | Ligne **12 :** 213 <br> Ligne **35 :** 13 | 65 |
| Selon l'invention (figure 2) | Ligne **48 :** 93 <br> Ligne **35 :** 13 | 30 |

On observe que la perte en d'hydrogène dissous dans le cadre d'un procédé d'hydrotraitement en contre-courant simulé selon l'invention (106 kg/h) est largement inférieure à celle d'un procédé d'hydrotraitement en contre-courant simulé connu de l'état de la technique (226 kg/h). La diminution de la perte en hydrogène dans le cadre du procédé selon d'hydrotraitement en contre-courant simulé selon l'invention conduit à une économie de 35 M€ sur 20 ans par rapport à un schéma classique.

**Revendications**

1. Procédé d'hydrotraitement d'une charge hydrocarbonée comportant des composés soufrés et azotés, dans lequel on effectue les étapes suivantes :

 a) on réalise au moins une étape d'hydrotraitement dans laquelle on met en contact au moins une partie de ladite charge et un flux gazeux comprenant de l'hydrogène avec au moins un catalyseur d'hydrotraitement pour obtenir un effluent hydrotraité (9,400) comprenant de l'hydrogène, des composés soufrés et azotés ;
 b) on réalise une séparation gaz/liquide dudit effluent hydrotraité (9,400) obtenu à l'étape a) pour produire au moins un premier effluent gazeux (23,240) et au moins un premier effluent liquide (11,600) ;
 c) on détend le premier effluent liquide (11,600) obtenue à l'étape b) à une pression comprise entre 0,5 et 4 MPa et on sépare ledit premier effluent liquide (11,600) pour obtenir au moins un deuxième effluent gazeux (41,410) comprenant de l'hydrogène, des composés soufrés et azotés, et au moins un deuxième effluent liquide (43,430) ;
 d) on refroidit ledit deuxième effluent gazeux (41,410) obtenu à l'étape c), comprenant de l'hydrogène, des composés soufrés et azotés, puis on sépare ledit deuxième effluent gazeux (41,410) pour obtenir au moins un troisième effluent gazeux (49,490) comprenant de l'hydrogène, des composés soufrés et azotés, et au moins un troisième effluent liquide (45,450) ;

e) on recycle au moins une partie dudit troisième effluent gazeux (49,490) obtenu à l'étape d), comprenant de l'hydrogène, des composés soufrés et azotés, à l'étape a) en tant que flux gazeux comportant de l'hydrogène approvisionné à l'étape a).

2. Procédé selon la revendication 1, **caractérisé en ce que** lors de l'étape e), ladite partie dudit troisième effluent gazeux est mélangée avec un flux gazeux d'hydrogène d'appoint (30,301).

3. Procédé selon les revendications 1 ou 2, **caractérisé en ce qu'**à l'étape d) on refroidit ledit deuxième effluent gazeux (41,410) à une température comprise entre 10 et 120°C.

4. Procédé selon l'une quelconque des revendications 1 à 3, **caractérisé en ce qu'**entre l'étape a) et b) on refroidit l'effluent hydrotraité (9,400) obtenu à l'étape a) à une température comprise entre 20 et 320°C.

5. Procédé selon l'une quelconque des revendications 1 à 4, **caractérisé en ce que** l'étape a) d'hydrotraitement est réalisée dans une zone réactionnelle (300) dans laquelle ladite charge et ledit flux gazeux comprenant de l'hydrogène circulent en co-courant descendant dans ladite zone réactionnelle (300) pour obtenir un effluent hydrotraité (400) comprenant de l'hydrogène, des composés soufrés et azotés.

6. Procédé selon l'une quelconque des revendications 1 à 5, **caractérisé en ce que** ledit premier effluent gazeux (240) obtenu à l'étape b) est refroidi puis envoyé dans un ballon séparateur (260) pour obtenir un courant gazeux (280), une fraction liquide hydrocarbonée (220) et une phase liquide aqueuse (270).

7. Procédé selon la revendication 6, **caractérisé en ce que** ledit courant gazeux (280) est envoyé dans l'unité de lavage (290) comprenant une solution absorbante comportant des amines.

8. Procédé selon l'une quelconque des revendications 1 à 7, **caractérisé en ce qu'**on envoie ledit troisième effluent gazeux (490) comprenant de l'hydrogène, des composés soufrés et azotés, dans une unité de lavage (290) comprenant une solution absorbante comportant des amines.

9. Procédé selon les revendications 7 ou 8, **caractérisé en ce que** le flux de tête (350) issu de l'unité de lavage (290) est recyclé en amont de l'étape d'hydrotraitement en tant que flux gazeux comportant de l'hydrogène.

10. Procédé selon l'une quelconque des revendications 1 à 4, **caractérisé en ce que** l'étape a) d'hydrotraitement est réalisée dans une première zone réactionnelle (3) pour produire une charge partiellement hydrotraitée (4) puis dans une deuxième zone réactionnelle (8) pour obtenir un effluent hydrotraité (9) comprenant de l'hydrogène, des composés soufrés et azotés.

11. Procédé selon la revendication 10 **caractérisé en ce qu'**entre la première zone réactionnelle (3) et la deuxième zone réactionnelle (8) on réalise une étape de séparation de ladite charge partiellement hydrotraitée (4) comprenant de l'hydrogène, des composés soufrés et azotés, pour produire au moins une fraction gazeuse (24) et une fraction liquide (6) qui est envoyée dans ladite deuxième zone réactionnelle (8).

12. Procédé selon la revendication 11, **caractérisé en ce que** la fraction gazeuse (24) est refroidie puis envoyée dans un ballon séparateur (26) pour obtenir un courant gazeux (28), une fraction liquide hydrocarbonée (22) et une phase liquide aqueuse (27).

13. Procédé selon l'une quelconque des revendications 10 à 12, **caractérisé en ce qu'**on envoie ledit troisième effluent gazeux (49) comprenant de l'hydrogène, des composés soufrés et azotés, dans une unité de lavage (29) comprenant une solution absorbante comportant des amines.

14. Procédé selon les revendications 12 ou 13, **caractérisé en ce que** ledit courant gazeux (28) est envoyé dans l'unité de lavage (29) comprenant une solution absorbante comportant des amines, et **en ce que** le flux de tête (35) issu de l'unité de lavage (29) est recyclé en amont de la seconde zone réactionnelle (8) en tant que flux gazeux comportant de l'hydrogène.

15. Procédé selon l'une quelconque des revendication 10 à 14, **caractérisé en ce que** le premier effluent gazeux (23) obtenu à l'étape d) est envoyé en amont de la première zone réactionnelle (3).

Figure 1

Figure 2

Figure 3

Figure 4

EP 3 124 577 A1

Europäisches
Patentamt

European
Patent Office

Office européen
des brevets

**RAPPORT DE RECHERCHE EUROPEENNE**

Numéro de la demande

EP 16 30 5812

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2012/140333 A1 (IFP ENERGIES NOUVELLES [FR]; QUIGNARD ALAIN [FR]; WEISS WILFRIED [FR]) 18 octobre 2012 (2012-10-18) * page 11, ligne 19 - ligne 29; figure 1 * * page 16, ligne 15 - page 17, ligne 13 * * page 18, ligne 1 - ligne 7 * * page 21, ligne 21 - ligne 31 * * page 17, ligne 26 - ligne 30 * * page 7, ligne 4 - ligne 20 * ----- | 1-15 | INV. C10G45/02 B01D19/00 |
| A | US 2006/118466 A1 (GALEAZZI RENAUD [FR] ET AL) 8 juin 2006 (2006-06-08) * le document en entier * ----- | 1-15 | |
| A | US 2013/098803 A1 (ZIMMERMAN PAUL R [US] ET AL) 25 avril 2013 (2013-04-25) * le document en entier * ----- | 1-15 | |
| | | | **DOMAINES TECHNIQUES RECHERCHES (IPC)** C10G B01D |

Le présent rapport a été établi pour toutes les revendications

| Lieu de la recherche | Date d'achèvement de la recherche | Examinateur |
|---|---|---|
| La Haye | 28 octobre 2016 | Gzil, Piotr |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 16 30 5812

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

28-10-2016

| Document brevet cité au rapport de recherche | Date de publication | Membre(s) de la famille de brevet(s) | Date de publication |
|---|---|---|---|
| WO 2012140333 A1 | 18-10-2012 | FR 2974109 A1<br>WO 2012140333 A1 | 19-10-2012<br>18-10-2012 |
| US 2006118466 A1 | 08-06-2006 | AU 2002222018 A1<br>EP 1451268 A1<br>JP 2005509727 A<br>KR 20040055814 A<br>US 2006118466 A1<br>WO 03044131 A1 | 10-06-2003<br>01-09-2004<br>14-04-2005<br>29-06-2004<br>08-06-2006<br>30-05-2003 |
| US 2013098803 A1 | 25-04-2013 | US 2013098803 A1<br>US 2013101475 A1<br>US 2014288339 A1 | 25-04-2013<br>25-04-2013<br>25-09-2014 |

EPO FORM P0460

Pour tout renseignement concernant cette annexe : voir Journal Officiel de l'Office européen des brevets, No.12/82